# EUROPEAN PATENT APPLICATION

(11) **EP 4 607 363 A1**
(43) Date of publication of application: **27.08.2025**
(21) Application number: 24159186.6
(22) Date of filing: 22.02.2024
(51) Int. Cl.: G06F 15/78

(54) **COMPUTE DEVICE FOR UNCERTAINTY TRACKING**

(71) Applicant: Signaloid Limited, Cambridge Cambridgeshire CB1 2GE (GB)
(72) Inventor: Stanley-Marbell, Phillip, Cambridge (GB); Vailakis, Apostolos Nikolaos, Cambridge (GB)
(74) Representative: Legl, Stefan

(57) **Abstract**

The present disclosure relates to a compute device for uncertainty tracking. The compute device includes an interface module configured for data communication with a host; and a compute module configured to process uncertainty information contained in input data received from the host via the interface module.

## Description

### FIELD

The present disclosure relates to a compute device for uncertainty tracking, a data processing system for uncertainty tracking, a computer-implemented method for uncertainty tracking, a computer program comprising instructions for carrying out the computer-implemented method for uncertainty tracking, and a computer-readable storage medium comprising instructions for carrying out the computer-implemented method for uncertainty tracking. More particularly, the present disclosure relates to a compute device for offloading uncertainty computation through a data storage interface.

### BACKGROUND

Nowadays, computers are used for data processing in almost every aspect of life. Data that can be processed by computers may include, but are not limited to, readings from sensors, stock market data, or measurements of the output of a quantum computer. While uncertainties in such data are commonplace, conventional computing platforms can only deal with integer and floating-point values which are certain and unambiguous. Therefore, conventional computing platforms often attempt to eliminate the uncertainties by averaging the variations across readings into a single number or performing some other statistical analysis to reduce the readings so that operations such as ADD, SUBSTRACT, MULTIPLY, XOR, etc. can be performed on these data. The results of these operations are other integers or floating-point values.

In many use cases, the accuracy of the processing results is critical. For example, the sensor data feeding an autonomous control algorithm of a self-driving car contains variations across the vehicle's sensors. The quality of the autonomous control algorithm's decision making may depend on the accuracy of the processing results. For example, if the autonomous control algorithm must perform an emergency stop, the uncertainties in the sensor data may affect whether the emergency stop is performed in a safe manner.

In such use cases, so-called Monte Carlo methods can be employed, which involve re-running software millions of times with slightly different inputs, according to the distributions of the input uncertainties, to understand how uncertainties in the inputs could affect results. Because computers today can only perform calculations on numbers as opposed to being able to perform calculations on uncertainty distributions, Monte Carlo methods are slow and expensive and only feasible for use in offline analyses.

Additionally, performing calculations on uncertainty distributions often necessitates the utilization of high-performance hardware and dedicated software. This poses challenges when attempting to integrate uncertainty tracking into existing systems, making it a challenging or even impossible task. The unique demands of uncertainty tracking often require tailored technological solutions, such as Monte Carlo methods, that may not align seamlessly with conventional, readily available systems.

### SUMMARY

In light of the above, a compute device for uncertainty tracking, a data processing system for uncertainty tracking, a computer-implemented method for uncertainty tracking, a computer program comprising instructions for carrying out the computer-implemented method for uncertainty tracking, and a computer-readable storage medium comprising instructions for carrying out the computer-implemented method for uncertainty tracking are provided.

It is an object of the present disclosure to be able to perform calculations on uncertainty distributions, particularly without the need for modifications on the host side. Another object of the present disclosure is to minimize the time and/or resources required for calculations on uncertainty distributions.

The objects are solved by the features of the independent claims. Preferred embodiments are defined in the dependent claims.

According to an independent aspect of the present disclosure, a compute device for uncertainty tracking is provided. The compute device includes an interface module configured for data communication with a host; and a compute module configured to process uncertainty information contained in input data received from the host via the interface module.

The term "host" as used throughout the present disclosure refers to a computer system or device that provides resources, services and/or data to other connected devices, notably the compute device. The host may interact and collaborate with the compute device to perform the tasks in the context of the present disclosure.

The term "compute module" as used throughout the present disclosure refers to a hardware component or unit designed for computational tasks. The compute module contains at least one processor and may optionally include other components such as at least one memory necessary for performing specific computations.

According to some embodiments, which can be combined with other embodiments described herein, the uncertainty information contained in the input data received from the host via the interface module includes, or relates to, uncertainty distribution information and/or a probability distribution. A probability distribution is generally understood as a phenomenon in terms of its sample space and the probabilities of events.

According to some embodiments, which can be combined with other embodiments described herein, the input data received from the host via the interface module are based on a set of empirical samples or an analytic distribution or a set of sensor readings.

The compute module is configured to process the uncertainty information through the use of uncertainty tracking functionalities. According to some embodiments, which can be combined with other embodiments described herein, the uncertainty tracking functionalities include one or more operations. Preferably, the one or more operations are performed on distributional values. Preferably, the one or more operations include arithmetic operations, more preferably addition, subtraction, multiplication, division and/or exponentiation, or other such operations typically contained in the instruction set of a microprocessor.

The term "uncertainty tracking" (or uncertainty propagation) as used throughout the present disclosure generally refers to the process of quantifying and managing uncertainties or variations associated with the input data as well as quantifying the uncertainties of the results of each operation, e.g., ADD, SUB, etc., as the input data are processed by the compute device/compute module. The term "uncertainty tracking" (or uncertainty propagation) particularly refers to the process of monitoring how uncertainties in data affect the outputs of sequences of arithmetic operations that act on the data. For a given data item, such as a measurement, the term uncertainty quantification (UQ) is usually used to refer to the process of quantifying the uncertainty of that single data item. Uncertainty tracking aims to provide a more comprehensive understanding of the limitations and potential errors associated with computational outcomes. It involves techniques and methodologies for representing, propagating, and, in some cases, mitigating uncertainties to enhance the reliability and robustness of computational results. This becomes particularly crucial when dealing with real-world data, complex models, or situations where precise information is challenging to obtain. Non-limiting exemplary methods for processing uncertainty information are explained in WO2022248719.

According to some embodiments, which can be combined with other embodiments described herein, the interface module is configured for data communication with the host based on a SD (Secure Digital) protocol, a CXL (Compute Express Link) protocol, a PCIe (Peripheral Component Interconnect Express) protocol, a NVME (Non-Volatile Memory Express) protocol, and/or a USB (Universal Serial Bus) protocol.

According to some embodiments, which can be combined with other embodiments described herein, the compute device includes at least one storage module.

According to some embodiments, which can be combined with other embodiments described herein, the compute device is configured to allow the host to write data to the at least one storage module and read data from the at least one storage module by addressing the interface module.

According to some embodiments, which can be combined with other embodiments described herein, the compute module is configured to process the uncertainty information contained in the input data received from the host via the interface module and stored in the at least one storage module.

According to some embodiments, which can be combined with other embodiments described herein, the compute device is configured to emulate a block storage device.

According to some embodiments, which can be combined with other embodiments described herein, the compute device is configured to emulate a raw block device.

According to some embodiments, which can be combined with other embodiments described herein, the compute device is configured to allow the host to write data to the at least one storage module and read data from the at least one storage module using a predefined set of storage I/O addresses.

According to some embodiments, which can be combined with other embodiments described herein, the compute device is configured to emulate a FAT32 formatted block storage device.

According to some embodiments, which can be combined with other embodiments described herein, the compute device is configured to allow the host to write data to the at least one storage module and read data from the at least one storage module using a synthetic filesystem.

The term "emulate" as used throughout the present disclosure refers to the process of replicating the behavior, functionality, or characteristics of one system, device, or software application using another system or set of instructions. This can be done to enable compatibility between different technologies or to simulate the behavior of specific hardware or software on a different platform. Emulation allows a system to mimic the operations of another system, typically for the purpose of running software or applications that were originally designed for a different architecture or environment.

According to some embodiments, which can be combined with other embodiments described herein, the compute device is configured to be removably connected to an interface device of the host to establish the data communication via the interface module.

The term "removably" as used throughout the present disclosure means a releasable mechanical connection between objects. It particularly refers to the capability or manner in which something can be taken away or detached, without causing damage or permanent alteration. When an object is described as being removably attached or connected, it indicates that it can be separated or taken off from its connected position without causing damage or introducing changes to either the object itself or its immediate environment.

According to some embodiments, which can be combined with other embodiments described herein, the compute device is configured to be removably inserted into the interface device of the host to establish the data communication via the interface module.

According to some embodiments, which can be combined with other embodiments described herein, the interface device of the host is a slot and the compute device is configured to be removably inserted into the slot.

According to some embodiments, which can be combined with other embodiments described herein, the compute device has, or is compatible with, a Secure Digital form factor, such as a microSD or full-size SD form factor.

Preferably, the compute device, such as the full-size SD form factor compute device, has a size of 32 mm × 24 mm × 2.1 mm.

Preferably, the compute device, such as the full-size SD form factor compute device, has a size of 32 mm × 24 mm × 1.4 mm.

Preferably, the compute device, such as the microSD compute device, has a size of 15 mm × 11 mm × 1 mm.

According to some embodiments, which can be combined with other embodiments described herein, the compute device is configured to behave as a (functioning) SD device so that the host is able to communicate with the compute device using, for example, the SD protocol or the SD-over-SPI protocol.

According to some embodiments, which can be combined with other embodiments described herein, the compute device includes a main module and a connector connected to the main module via a flexible connection.

According to some embodiments, which can be combined with other embodiments described herein, the main module includes at least the compute module. Optionally, the main module may further include the at least one storage module.

According to some embodiments, which can be combined with other embodiments described herein, the connector is configured to be removably inserted into the interface device of the host to establish the data communication via the interface module.

According to some embodiments, which can be combined with other embodiments described herein, the connector has a Secure Digital form factor, such as a microSD or full-size SD form factor.

According to some embodiments, which can be combined with other embodiments described herein, the main module includes at least one power port for supplying the compute device with power.

Additionally, or alternatively, the main module may include at least one wireless communications module.

Additionally, or alternatively, the main module may include at least one interface unit for connection with an external storage medium.

According to some embodiments, which can be combined with other embodiments described herein, the compute module includes, or is comprised of, one or more Field Programmable Gate Arrays, FPGAs.

According to some embodiments, which can be combined with other embodiments described herein, the compute module is configured to receive instructions from the host one at a time.

According to some embodiments, which can be combined with other embodiments described herein, the compute device is configured to send, in response to each instruction the host sends, a program counter value to the host for the next instruction.

According to some embodiments, which can be combined with other embodiments described herein, the compute module is configured to receive instructions from the host in the form of a complete program.

Preferably, the compute module is configured to receive instructions from the host in the form of a complete program via a bootloader. A bootloader is generally understood as a specialized program or code that initiates the startup process of a computer system. The bootloader typically performs tasks such as hardware initialization, checking system integrity, and loading the operating system into memory. It ensures a smooth transition from the hardware's powered-off state to a state where the operating system can take control and manage the system's resources.

According to some embodiments, which can be combined with other embodiments described herein, the compute module is configured for re-programmability.

Preferably, the compute module is configured for re-programmability via a bootloader and/or a dedicated connector.

According to some embodiments, which can be combined with other embodiments described herein, the compute device further includes at least one wireless communications module for transmitting data (e.g., results of the uncertainty tracking performed by the compute module) to one or more external entities.

According to some embodiments, which can be combined with other embodiments described herein, the one or more external entities include a workstation and/or a cloud compute engine.

According to another independent aspect of the present disclosure, a data processing system for uncertainty tracking is provided. The data processing system includes the compute device of the embodiments of the present disclosure and the host having the interface device.

According to another independent aspect of the present disclosure, a computer-implemented method for uncertainty tracking is provided. The method includes establishing data communication between a compute device and a host; receiving input data from the host at an interface module of the compute device; processing uncertainty information contained in the input data by a compute module of the compute device to perform uncertainty tracking; and outputting a processing result of the uncertainty tracking.

According to some embodiments, which can be combined with other embodiments described herein, the interface module of the compute device is removably connected to an interface device of the host to enable the data communication.

According to another independent aspect of the present disclosure, a computer program is provided. The computer program has instructions which, when the program is executed by a computer, cause the computer to carry out the method for uncertainty tracking according to the embodiments described in this document.

According to another independent aspect of the present disclosure, a computer-readable storage medium is provided. The computer-readable storage medium has instructions which, when the program is executed by a computer, cause the computer to carry out the method for uncertainty tracking according to the embodiments described in this document.

Preferably, the computer-readable storage medium is a non-transitory computer-readable storage (or memory) medium. The term "non-transitory computer-readable storage (or memory) medium" includes, but is not limited to, magnetic or optical media, e.g., disks, hard drives, or DVDs/CD-ROMs, volatile or non-volatile media such as RAM (e.g., SDRAM, DDR, RDRAM, SRAM, etc.), ROM, flash memory, etc. The non-transitory computer-readable storage (or memory) medium may include other types of non-transitory memory as well or combinations thereof.

According to another independent aspect of the present disclosure, a data processing system for uncertainty tracking is provided. The data processing system includes one or more processors configured to establish data communication between a compute device and a host; receive input data from the host; process uncertainty information contained in the input data to perform uncertainty tracking; and output a processing result of the uncertainty tracking.

According to some embodiments, which can be combined with other embodiments described herein, the interface module of the compute device is removably connected to an interface device of the host to enable the data communication.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: illustrates a schematic view of a conventional processor unit;
- FIG. 2: illustrates a schematic view of a processor unit according to embodiments of the present disclosure;
- FIG. 3: shows a data processing system for uncertainty tracking according to embodiments of the present disclosure;
- FIG. 4: shows a compute device according to embodiments of the present disclosure;
- FIG. 5: shows a compute device according to further embodiments of the present disclosure;
- FIG. 6: shows a compute device according to further embodiments of the present disclosure; and
- FIG. 7: illustrates a flow chart of a computer-implemented method for uncertainty tracking according to embodiments of the present disclosure.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

This document includes references to "one embodiment" or "an embodiment". The appearances of the phrases "in one embodiment" or "in an embodiment" do not necessarily refer to the same embodiment. Particular features, structures, or characteristics may be combined in any suitable manner consistent with this disclosure.

The term "comprising" is open-ended. As used in the appended claims, this term does not foreclose additional structure or steps.

Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware, for example, circuits, memory storing program instructions executable to implement the operation, etc. Additionally, "configured to" can include generic structure (e.g., generic circuitry) that is manipulated by software and/or firmware (e.g., an FPGA or a general-purpose processor executing software) to operate in a manner that is capable of performing the task(s) at issue.

As used herein, the terms "first", "second", etc. are used as labels for nouns that they precede, and do not imply any type of ordering (e.g., spatial, temporal, logical, etc.).

As used herein, the term "based on" is used to describe one or more factors that affect a determination. This term does not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

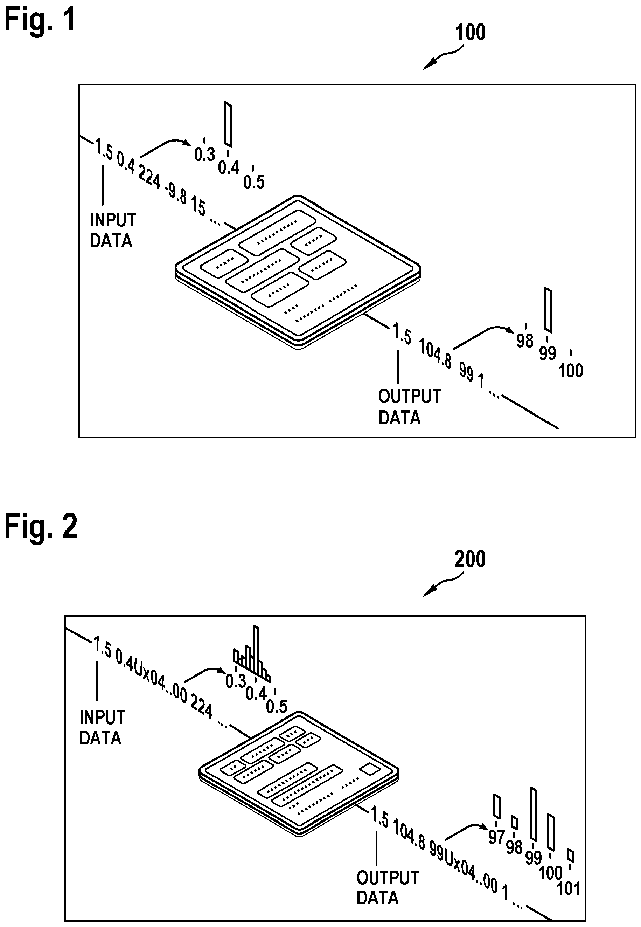

FIG. 1 illustrates a schematic view of a conventional processor unit 100.

A conventional processor unit 100 takes as input integer and floating-point values and performs operations (e.g., ADD, SUBSTRACT, MULTIPLY, XOR, etc.) on these data. The results of these operations are other integers or floating-point values.

Uncertainties in input data such as readings from sensors or stock market data are not uncommon, but the conventional processor unit 100 can only deal with integer and floating-point values which are certain and unambiguous. Therefore, the software running over the conventional processor unit 100 eliminates the uncertainties by averaging the variations across readings into a single number or performing some other statistical analysis to reduce the readings, to get the data into a form that the conventional processor unit 100 can handle, before feeding the averaged data into subsequent steps.

However, in many cases, the accuracy of the processing result is critical. For example, if an autonomous control algorithm of a driverless car must perform an emergency stop, the uncertainties in the sensor data may affect whether the emergency stop is performed in a safe manner. Because computers today can only perform calculations on numbers as opposed to being able to perform calculations on uncertainty distributions, the accuracy of the processing results may be insufficient, at least for some applications.

FIG. 2 illustrates a schematic view of a processor unit 200 according to embodiments of the present disclosure.

The processor unit 200 of the present disclosure can take in as input the same kinds of integer and floating-point values and perform the same kinds of operations (e.g., ADD, SUBSTRACT, MULTIPLY, XOR, etc.) as the conventional processor unit. In addition to that, the values taken as input include additional information about distributions associated with each value, and the processor unit 200 may also, in some embodiments, enable a number of additional operations that act on the distribution information (e.g., BAYESLAPLACE, DISTFROMSAMPLES, etc.).

Embodiments for implementing the uncertainty tracking technology are described in detail below.

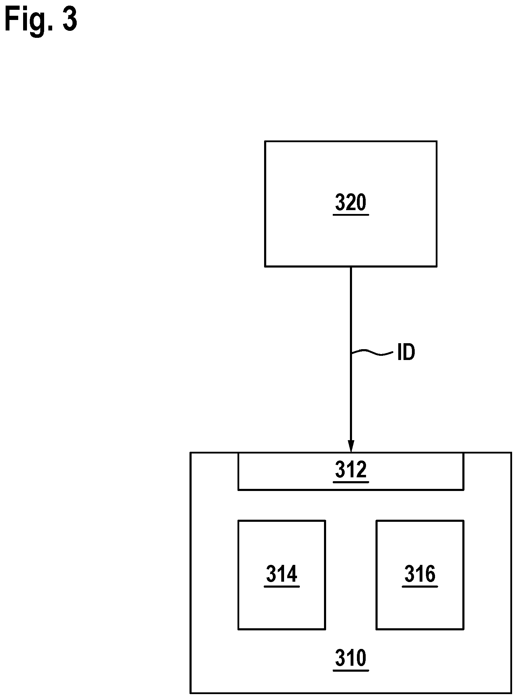

FIG. 3 shows a data processing system 300 for uncertainty tracking according to embodiments of the present disclosure.

The data processing system 300 includes a compute device 310 having uncertainty tracking capabilities and a host 320. The host 320 may interact and collaborate with the compute device 310 to perform the tasks outlined in the context of the present disclosure. In particular, the host 320 may supply input data ID to the compute device 310 for the purpose of conducting uncertainty tracking.

The compute device 310 includes an interface module 312 configured for data communication with the host 320 and a compute module 314 configured to process uncertainty information contained in the input ID data received from the host 320 via the interface module 312. The uncertainty information contained in the input data ID may include, or relate to, uncertainty distribution information and/or a probability distribution.

The interface module 312 can be configured for data communication with the host 320 based on a SD (Secure Digital) protocol, a CXL (Compute Express Link) protocol, a PCIe (Peripheral Component Interconnect Express) protocol, a NVME (Non-Volatile Memory Express) protocol, and/or a USB (Universal Serial Bus) protocol.

The compute module 314 is configured to process the uncertainty information contained in the input data ID received via the interface module 312 using its uncertainty tracking functionalities. In some embodiments, the uncertainty tracking functionalities implemented on the compute module 314 include one or more operations. Preferably, the one or more operations are performed on distributional values. Preferably, the one or more operations include arithmetic operations, more preferably addition, subtraction, multiplication, division and/or exponentiation, or other such operations typically contained in the instruction set of a microprocessor.

Optionally, the compute device 310 includes at least one storage module 316. The host 320 can write data (e.g., the input data ID) to the at least one storage module 316 for processing by the compute module 314 and read data (e.g., processing results of the uncertainty tracking) from the at least one storage module 316 by addressing the interface module 316 in an appropriate manner.

The compute device 310 can be configured to be removably connected to an interface device of the host 320 to establish the data communication via the interface module 312. For example, the compute device 310 can be configured to be removably inserted into the interface device of the host 320, such as a slot, to establish the data communication.

According to some embodiments, the compute device 310 has a Secure Digital form factor, such as a microSD or full-size SD form factor. However, the present disclosure is not limited to SD and microSD and could be applied to other storage interfaces such as CXL, PCIe, NVME, or USB.

The compute device 310 of the present disclosure offers uncertainty tracking computation and optional data storage capabilities. The compute device 310 can be used to track uncertainties through the computations of algorithms, to convert sensor data to distributional values for storage, etc. The uncertainty tracking capable compute device 310 has the ability to interface with existing hardware that offers for instance microSD or full-size SD slots for data logging, without the need for modifications on the host side or any additional drivers.

The compute device 310 may provide at the same time the capability to stream data (logs, images, etc.) to a nearby workstation or to a cloud platform. For example, the compute device 310 could feature WiFi or BLE capabilities to send data to a nearby workstation or directly to a cloud compute engine via HTTP API. To achieve this, the compute module (processor) can communicate with a wireless chip (e.g., ESP32) via memory mapped I/O. Using a wireless module like ESP32, which also includes a microcontroller, allows for the offloading of most wireless I/O operations, so the compute module (processor) does not need to implement the wireless protocol (e.g., the BLE, WiFi or HTTP protocol).

In some embodiments, the compute device can package and send data to a nearby workstation via BLE. These can be the raw data that are sent by the host, or preprocessed packages. For example, the compute device can buffer a set number of data samples and generate strings to be sent to the workstation. The workstation can log the data, send them for further processing to a cloud compute engine, or process them locally.

In further embodiments, the compute device can instruct a WiFi module to connect to a specific access point to grant Internet access. Then, the WiFi module can use HTTP requests to send data to a cloud compute engine. The compute device can either act as a gateway, or run specific tasks.

In the subsequent sections, detailed explanations are provided for exemplary and non-limiting examples of the compute device, including its components and functionalities.

### Physical implementation

In some embodiments, the compute device can be in the microSD or full-size SD form factor, compatible with most microSD and full-size SD slots on the market. The electrical and data interface protocol for interacting with the compute device can be implemented in a field-programmable gate array (FPGA) but is not limited thereto.

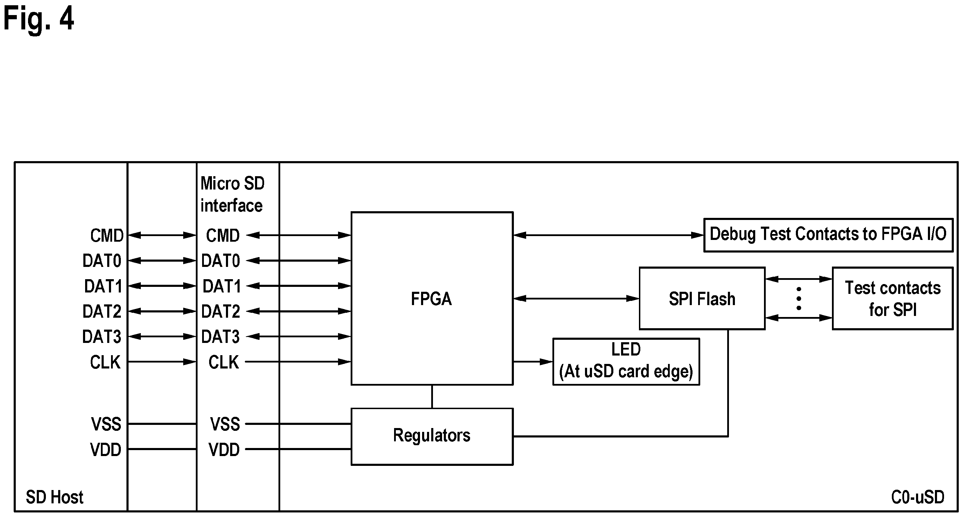

FIG. 4 shows an implementation of the microSD form factor version of the compute device with the interface to the SD host device being the 4-bit SD protocol which uses four data signals (DAT0 to DAT3).

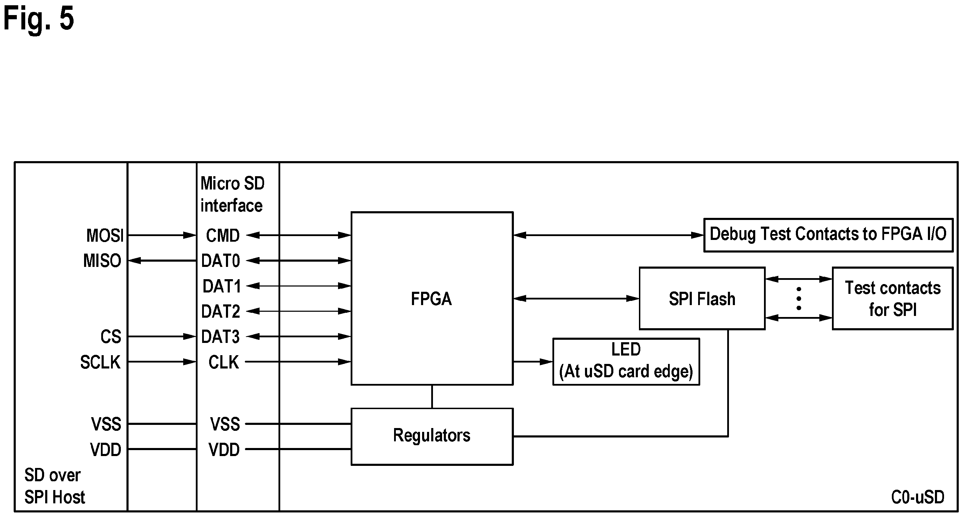

FIG. 5 shows an implementation of the microSD form factor version of the compute device with the interface to the host device being the SD-over-SPI (Serial Peripheral Interface) interface which only uses the DAT0 signal out of the four DATx lines.

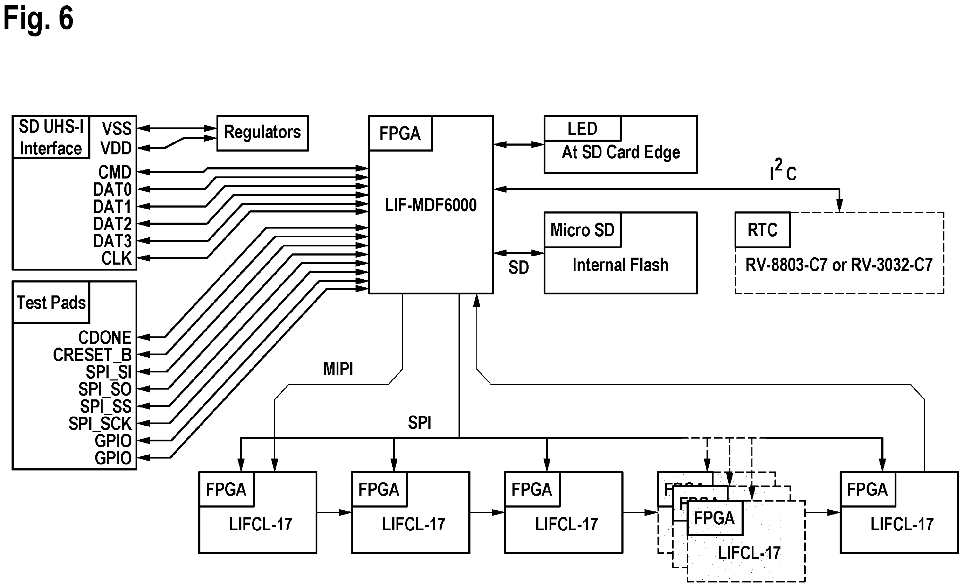

FIG. 6 shows a full-size SD version of the compute device. The full-size SD version of the compute device may use multiple interconnected FPGAs for additional processing power, rather than the single FPGA shown in FIGs. 4 and 5.

Possible FPGAs for the embodiments shown in FIGs. 4 to 6 are the Lattice ice40, CertusNX-40, CertusNX-17 or CrosslinkNX-17. In an exemplary embodiment, the FPGA implements part or all of the SD protocol interface and emulates the communication behavior of an SD card via the SD or SD-over-SPI interface.

In further embodiments, the compute device can be implemented as an external compute device, powered for instance by an external USB-C power supply. The compute device in this embodiment could have a connector such as a small FFC connector (for example the Hirose FH33-9S-0.5SH(10)). These flexible cables could feature a microSD or full-size SD device connector at the end, allowing for the compute device to interface with the host's microSD and full-size SD slot. Such an embodiment with an external compute module could support WiFi or BLE via an ESP32 microcontroller (or similar) for sending data to a remote machine and/or a cloud compute engine. Optionally, such an external module could feature a microSD slot for removable data storage.

In some embodiments, the host can issue a specific command to set the compute device into deep sleep. This will result in the processor's clock being gated, the non-volatile memories being set to low power state and, depending on the implementation, any additional wireless communication chip switching to deep sleep. The SD-device emulation component of the compute device will stay active awaiting for a wakeup command.

### Device interface

### Example 1: Implementation as raw block device

The compute device can be configured to appear to the host as a block storage device when the compute device is plugged into the host. All communications between a host and the compute device can be achieved using block reads and writes to a predefined set of storage I/O addresses. The host does not need to format the compute device to read and write data to it. The following table 1 shows an example of the I/O addresses, as offsets from the beginning of the block storage device, that enable data and command exchange from the host to the compute device.

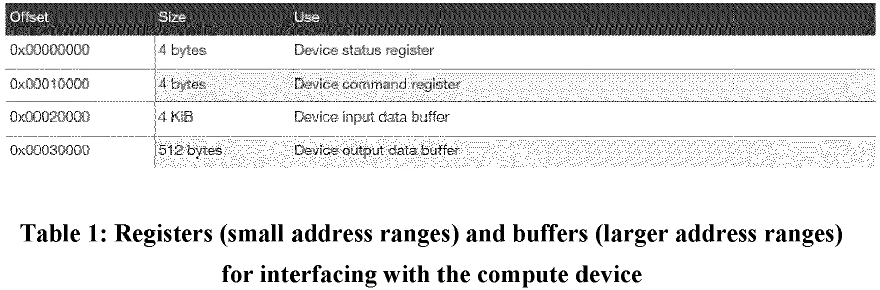

In the above example, the host can send commands, send data, probe the status of the compute device and retrieve data from a predetermined set of offsets. The size of the input and output data packets can be made to be different in each compute device implementation and to depend on the physical implementation.

In general, writes and reads to the SD interface could be of certain number of b-byte blocks (with b = 512 for example). The status register, device command, input buffer and output buffer, which are defined in the SD protocol interface, will be accessible by the uncertainty tracking functionalities (i.e., the system for quantifying the uncertainty of stored data values as well as performing uncertainty-tracking computation on data written to it) embedded behind the SD protocol interface. The uncertainty-quantifying and uncertainty-tracking component which is implemented inside the FPGA will be able to read the device command and input buffer and write to the status register and output buffer. Uncertainty data can be sent to the compute device via the input buffer either as a set of samples or encoded as strings.

In one embodiment, the uncertainty-tracking computation and uncertainty-analyzing component could be implemented as a program running on a processor, where the processor is implemented using the FPGA.

### Example 2: Implementation as FAT32 formatted device

The compute device can be configured to appear to the host, into which it is plugged, as a FAT32 formatted block storage device. This allows for accessing the compute device as though it were a regular FAT32-formatted external disk, visible to all programs on the host which can read and write files from the host computer's filesystem. The compute device which appears to the host as a FAT32-formatted disk could also be accessed by a capability-constrained computing system such as a microcontroller, by using existing libraries on the microcontroller for reading/writing to the standard FAT32 filesystem format.

In this embodiment, rather than taking read and write operations at fixed offsets, the communication with the compute device is through what is commonly referred to as a synthetic filesystem, with a series of predetermined files. When these predetermined files are written to or read from, those communications cause the data being written or read to be exchanged with the uncertainty-quantifying and uncertainty-tracking component implemented inside the FPGA. One example of the synthetic filesystem exposed could be as follows:

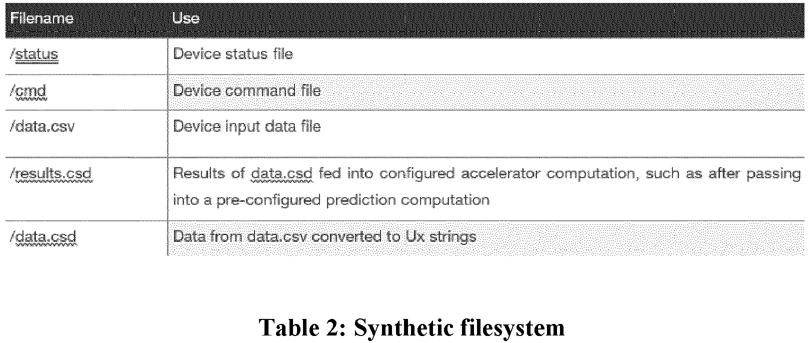

In the above example, the host can send commands, send data, probe the status of the compute device and retrieve data from a predetermined set of files. The size of the input and output data files can be different in each compute device implementation and could depend on the physical implementation (FPGA used and/or type of non-volatile memory the device features). Writes and reads will be of certain b-byte blocks (with b = 512 for example).

In some embodiments, the compute device can take data written into the synthetic file "data.csv" and provide a paired synthetic file, "data.csd" which, when read, returns a comma-separated set of strings.

In some embodiments, the "cmd" file can be used to specify how data written to "data.csv" should be parsed and converted to distributions. For example, writing "type: uint32_t ',' string ', ' uint64_t newline batching: 32" will cause the synthetic filesystem to continuously parse data written into data.csv which is assumed to be newline-delimited with three fields per line and to batch sets of 32 lines into distributions. The read-only file "data.csd" can then be read to obtain the distributional (e.g., comma-separated string) data. The interface can also support treating overwrites of a file as being new distributional entries by replacing the "newline" in the cmd command to be "seekstart". Similarly, a more elaborate "cmd" command could be used to convert a video stream written as a single repeated write from file offset 0, or as a sequence of writes at increasing offsets. In one example application, commands written to the "cmd" file could also be used to apply computations to data. The user of the compute device could write, e.g., CSV of raw bytes read from sensor(s) to the input "data.csv" and read back the results of computation from "results.csd".

In some embodiments, the "cmd" file could be used to allow the user to also specify a firmware update for the implementation of the SD accelerator module.

### Processor

In one embodiment, the uncertainty-tracking computation and uncertainty-analyzing component could be implemented as a program running on a processor, where the processor is implemented using the FPGA. The processor can feature uncertainty tracking capabilities either implemented directly in hardware and/or achieved via binary translation.

### Example 1: Getting instructions into processor (host writes one instruction at a time to device)

By defining an additional set of registers (small address ranges) and buffers (larger address ranges) for interfacing with the compute device (see, e.g., listed in Table 1, or to one of the synthetic files in Table 2), the compute device defines a protocol for loading in programs (or sequences of) instructions (e.g., via an "instruction register" to write to).

In one embodiment, the instructions sent over to the compute device can simply be a transmission of the instructions in a binary: In response to each instruction the host computer sends, the host gets back a program counter (PC) value for the next instruction to send so that the compute device can direct the host on the occurrence of a branch, etc. A simple driver that can speak the low-level sdcard protocol used by the compute device can use registers (extended as described above) to feed instructions one at a time, getting the next PC to fetch from back each time.

### Example 2: Getting instructions into processor (host writes a complete program to the device via a bootloader to be stored in the device's non-volatile memory)

The host can switch the compute device into a bootloader mode by issuing a specific command to one of the registers listed e.g. in Table 1 (or to one of the synthetic files in Table 2). The host can then write a complete program to this address for the processor to execute. The bootloader can then switch back to the regular functionality of the compute device, either by a command issued by a host, or after a pre-determined timeout.

### Re-programmability

In some embodiments, the host can switch the compute device into bootloader mode via issuing a specific command. The bootloader exposes a specific address or filename depending on the implementation. The host can then write new bitstream configurations for the FPGA chips using this interface. The host can override the existing application bitstream, or the existing bootloader.

In further embodiments, new configurations can be flashed via a dedicated dfu connector. For example, a small mezzanine connector can be provided, exposing an SPI port. Using this port, the compute device's configuration bitstreams can be updated.

### Application examples

### Example 1: Implementing sensor conversion routines with uncertainty tracking

In this example, the compute device could be connected to a microcontroller-based host device (for example the Adafruit M0 Adalogger). Additionally, a sensor like the BME680 could be connected to the host microcontroller. This specific sensor requires a set of routines to be implemented in the microcontroller for converting the raw ADC data to temperature values. Instead, the microcontroller sends the raw ADC values to the compute device to calculate the converted temperature. The compute device can complete these conversions while also modeling the ADC quantization error as uncertainty, converting multiple ADC samples to a single distributional input or injecting other uncertainty parameters into the conversion routines based on the physical characteristics of the sensor.

### Example 2: Compressing data logs to distributional values

In this example, an embodiment of the compute device that offers large non-volatile storage, or removable microSD cards, is connected to a data logging machine, like a weather station, or a PLC central processing unit. The compute device could be configured to present itself as a FAT32 formatted block storage device. The data logging system can be configured to save its logs to the input file of the synthetic filesystem, or a specific directory. The compute device consumes the stored logs and converts them to distributional values before storing them to its non-volatile memory or to a removable microSD card. Users can then retrieve these data either by removing the microSD card, or by connecting the compute device to a PC.

### Example 3: Streaming data logs to a nearby workstation or a cloud compute platform

In this example, an embodiment of the compute device that offers wireless communication via WiFi or BLE could be connected to a data logging machine like a weather station, or a PLC central processing unit. The compute device is configured to present itself as a FAT32 formatted block storage device. The data logging system can be configured to save its logs to the input file of the synthetic filesystem, or a specific directory. The compute device consumes the stored logs and streams them to a nearby workstation (via BLE) or to a cloud compute platform via WiFi. The compute device can either send the data logs raw, or convert multiple samples to distributional values and send them as strings for further processing.

### Example 4: Running uncertainty-tracking applications on a personal computer

In this example, an embodiment of the compute device could be inserted into the SD card slot of a personal computer (either built-in or via an SD to USB adapter). Libraries for building applications and running them on the compute module could be provided by a service provider. Additionally, the service provider can provide plugins for VS Code, for developing uncertainty-tracking applications locally, and running them on the compute device.

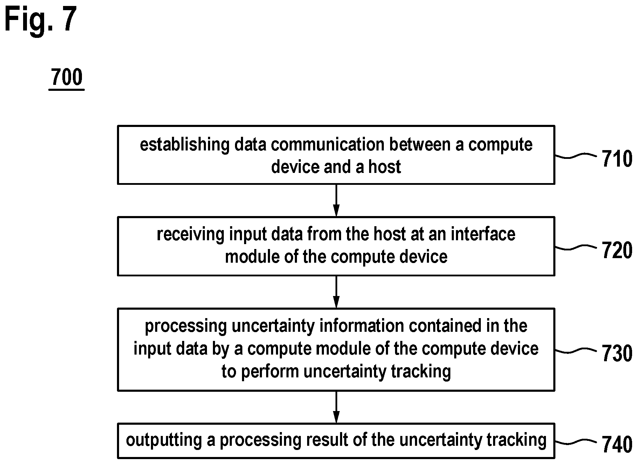

FIG. 7 illustrates a flow chart of a computer-implemented method 700 for uncertainty tracking according to embodiments of the present disclosure.

The method 700 includes at block 710 establishing data communication between a compute device and a host; at block 720 receiving input data from the host at an interface module of the compute device; at block 730 processing uncertainty information contained in the input data by a compute module of the compute device to perform uncertainty tracking; and at block 740 outputting a processing result of the uncertainty tracking.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. A compute device for uncertainty tracking, comprising:
- an interface module configured for data communication with a host; and
- a compute module configured to process uncertainty information contained in input data received from the host via the interface module,
wherein the compute device is configured to be removably connected to an interface device of the host to establish the data communication via the interface module.

2. A compute device of claim 1, wherein the interface module is configured for data communication with the host based on a SD protocol, a SD-over-SPI protocol, a CXL protocol, a PCIe protocol, a NVME protocol, or a USB protocol.

3. A compute device of claim 1 or 2, further including at least one storage module, wherein the compute device is configured to allow the host to write data to the at least one storage module and read data from the at least one storage module by addressing the interface module,
wherein the compute module is configured to process the uncertainty information contained in the input data received from the host via the interface module and stored in the at least one storage module.

4. A compute device of any one of claims 1 to 3, wherein the compute device is configured to emulate a block storage device.

5. A compute device of claim 4, wherein
- the compute device is configured to emulate a raw block device, in particular wherein the compute device is configured to allow the host to write data to the at least one storage module and read data from the at least one storage module using a predefined set of storage I/O addresses, or
- the compute device is configured to emulate a FAT32 formatted block storage device, in particular wherein the compute device is configured to allow the host to write data to the at least one storage module and read data from the at least one storage module using a synthetic filesystem.

6. A compute device of any one of claims 1 to 5, wherein
- the compute device is configured to be removably inserted into the interface device of the host to establish the data communication via the interface module, in particular wherein the interface device of the host is a slot and the compute device is configured to be removably inserted into the slot; and/or
- the compute device has a Secure Digital form factor, particularly a microSD or full-size SD form factor.

7. A compute device of any one of claims 1 to 5, wherein the compute device includes a main module and a connector connected to the main module via a flexible connection, wherein the main module includes at least the compute module, and wherein the connector is configured to be removably inserted into the interface device of the host to establish the data communication via the interface module, in particular wherein
- the connector has a Secure Digital form factor; and/or
- the main module includes at least one power port for supplying the compute device with power; and/or
- the main module includes at least one wireless communications module; and/or
- at least one interface unit for connection with an external storage medium.

8. A compute device of any one of claims 1 to 7, wherein the compute module includes one or more Field Programmable Gate Arrays, FPGAs.

9. A compute device of any one of claims 1 to 8, wherein
- the compute module is configured to receive instructions from the host one at a time, in particular wherein the compute device is configured to send, in response to each instruction the host sends, a program counter value to the host for the next instruction; and/or
- the compute module is configured to receive instructions from the host in the form of a complete program, particularly via a bootloader; and/or
- the compute module is configured for re-programmability, particularly via a bootloader and/or a dedicated connector.

10. A compute device of any one of claims 1 to 9, further including at least one wireless communications module for transmitting data to one or more external entities, in particular wherein the one or more external entities include a workstation and/or a cloud compute engine.

11. A data processing system for uncertainty tracking, comprising:
- the compute device of any one of claims 1 to 10; and
- the host having the interface device.

12. A computer-implemented method for uncertainty tracking, comprising:
- establishing data communication between a compute device and a host;
- receiving input data from the host at an interface module of the compute device;
- processing uncertainty information contained in the input data by a compute module of the compute device to perform uncertainty tracking; and
- outputting a processing result of the uncertainty tracking.

13. A computer program comprising instructions which, when the program is executed by a computer, cause the computer to carry out the method of claim 12.

14. A computer-readable storage medium comprising instructions which, when the program is executed by a computer, cause the computer to carry out the method of claim 12.

15. A data processing system for uncertainty tracking, comprising one or more processors configured to:
- establish data communication between a compute device and a host;
- receive input data from the host;
- process uncertainty information contained in the input data to perform uncertainty tracking; and
- output a processing result of the uncertainty tracking.
